# EUROPEAN PATENT APPLICATION

(11) **EP 1 055 842 A1**
(43) Date of publication of application: **29.11.2000**
(21) Application number: 99110168.4
(22) Date of filing: 26.05.1999
(51) Int. Cl.: F16G 3/00

(54) **A joint for belts**

(71) Applicant: Ronflette S.A., 2233 Luxembourg (LU); RONFLETTE S.A. c/o SYSTEM S.p.A., 41042 Fiorano Modenese (MO) (IT)
(72) Inventor: Stefani, Franco, 41049 Sassuolo (MO) (IT)
(74) Representative: Gotra, Stefano

(57) **Abstract**

The invention relates to a joint for belts which can be used for ring-wound belts (3) stretched between wheels or rotating drums, characterised in that two ends of the belt (3) are shaped in such a way that each end exhibits a plurality of identical bent-back tongues (1) arranged in such a way that the tongues (1) of a first belt end couple alternatedly with the tongues (1) of the second end and create a space internally of which a bar (2) can be inserted, to which bar (2) the tongues (1) can be fixed by screws. The coupling is preferably achieved by using a U-shaped cover (4) which fits over the assembly constituted by the tongues (1) and the bar (2) and is screwed down thereon using screws (5).

## Description

The invention relates especially to joints for steel belts. Its field of use is extremely wide because it comprises all those industrial applications using ring-wound belts stretched between wheels or rotary drums.

In prior art realisations comprising for example metal belts, frequently made of steel, a belt is usually constituted by a single piece whose ends are joined together by welding or rivets. In some cases the ring-wound belts are made up of more than one piece, stably jointed together consecutively.

The main drawback of these realisations derives from the type of joint used, as the jointed belt is very difficult to re-open.

A further drawback in prior art realisations derives from the fact that the manipulation and transport of the whole ring-wound belt become more difficult as the belt gets longer.

Added to the above disadvantages, there is also the drawback that the jointing systems at present in use are considerably limited as regards resistance to traction, so that the belts must never be subjected to more than very small stretching solicitations. For this reason it is sometimes necessary to predispose belt support systems between the drive and idle drums, as well as fitting anti-skid devices to prevent the belt from being subject to sideways displacements during motion.

The main aim of the present invention is to obviate the limits and drawbacks inherent to the prior art.

An advantage of the invention is that the belt is easy to dismount, assemble and in general manipulate.

A further advantage of the invention is that a belt of any length can be produced.

These aims and advantages and more besides are all attained by the present invention, as it is characterised in the appended claims.

Further characteristics and advantages of the invention will better emerge from the detailed description that follows of a preferred but non-exclusive embodiment, illustrated purely by way of non-limiting example in the accompanying figures of the drawings, in which:
figure 1 is an exploded schematic perspective view;
figure 2 is a schematic plan view from above;
figure 3 is a schematic section made according to line I-I of figure 2;
figure 4 is a schematic lateral view of an application of the invention to a ring-wound belt stretched between two drums;

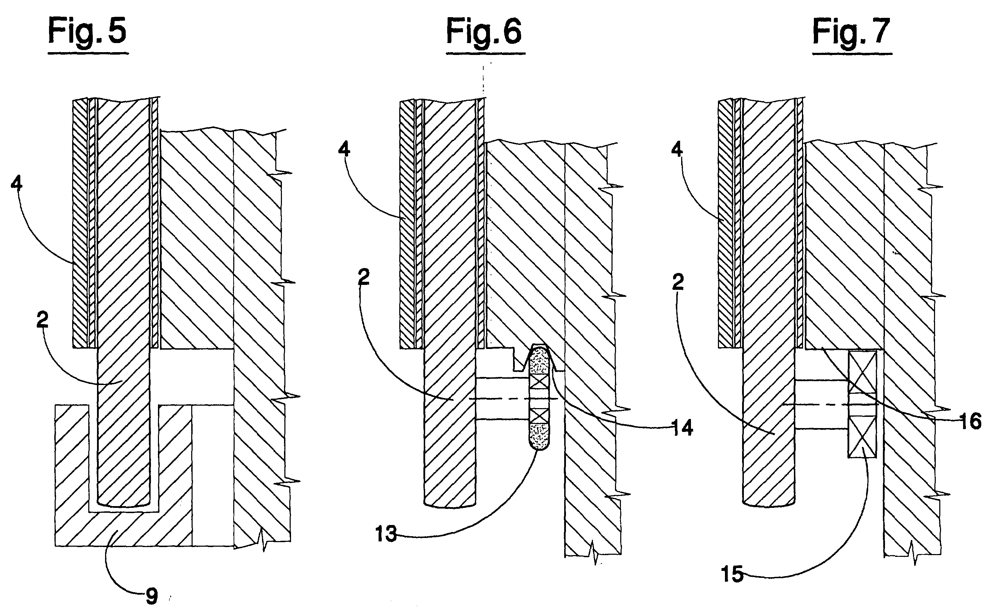

figure 5 is an enlarged-scale schematic section made according to line V-V of figure 2;
figure 6 is a large-scale schematic section made according to line V-V of figure 2 of a further embodiment;
figure 7 is a large-scale schematic section made according to line V-V of figure 2 of a further embodiment.

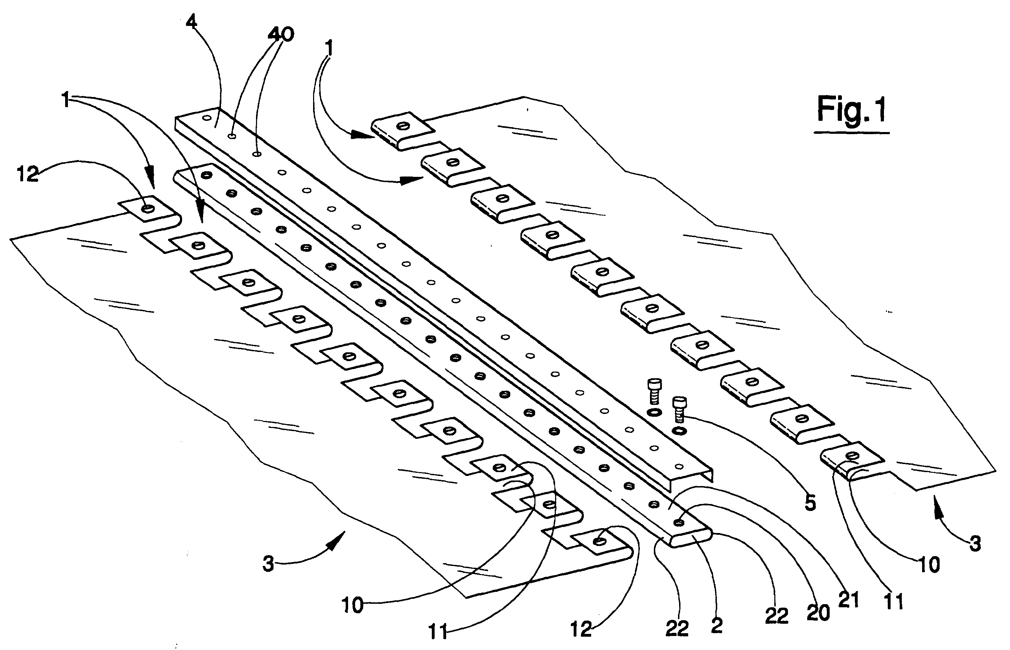

With reference to the figures of the drawings, 3 denotes a belt, or rather a length of belt whose ends, represented in figure 1 are predisposed to be joined by means of a joint 6 in order to realise a ring-wound belt.

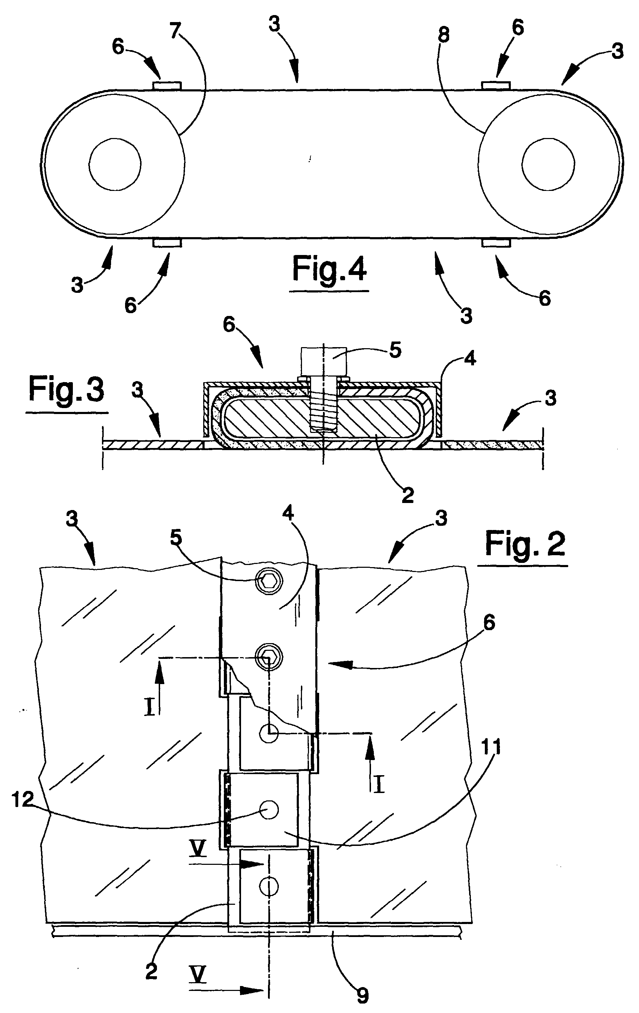

Figure 4 is a schematic diagram of a ring-wound belt stretched between two rotating drums 7 and 8. The belt is produced from the consecutive jointing of two or more lengths of belt 3 by means of the joints denoted in their entirety by 6. The lengths of belt 3 have at least the same straight transversal sections.

With specific reference to the constitution of the single joints 6, the two belt 3 ends (or the two facing ends of two different lengths of belt) are conformed so that each of them exhibits a plurality of identical bent tongues 1, arranged so that the tongues 1 of the first end can be coupled to those of the second end in such a way that together the two series of tongues upon coupling define a space (inside the bent-back tabs) in which a bar 2 can be inserted to constrain both ends of belt 3. The tongues 3 can be fixed to the bar 2.

Each tongue 1 exhibits a bent-back end 11 which is parallel to the non-bent length of tongue 10, which latter is co-planar to the belt 3.

The bent-back end 11 is about as long as the non-bent end 10.

The single tongues 1 can be fixed to the bar 2 by means of a removable constraint, so that the non-bent portions of the two belt 3 ends are arranged alternatedly and the resulting joined surface they form is perfectly coplanar with the rest of the belt 3 surface.

The removable constraint is achieved by at least one screw 5 for each tongue, which can be inserted through a hole 12 afforded in each bent end 11 and into a threaded hole 20 made in the bar 2.

The bar 2 is flat with two opposite flat faces 21, identical and having convex interconnecting sides 22.

The joint 6 also comprises a U-shaped cover 4 which is placed over the bar at the joint zone, is provided with holes corresponding to those in the tongues 1 and is constrained by the same screws 5 that fasten the tongues 1 to the bar 2.

The bar 2 length is greater than the breadth of the belt 3, so that the ends of the bar 2 project beyond the two sides of the belt 3.

The two projecting ends of the bar 2 can advantageously be coupled to the inside of C-shaped guides 9 to become belt guides, both vertically and laterally (i.e. horizontally).

In other embodiments each of the two projecting ends has inferiorly constrained to it at least one guide organ, rotatably constrained on a fixed guide arranged parallel to the belt 3.

In order to exert the guiding action, both in vertical and in horizontal directions, the guide organ can be equipped with a convex-edged idler wheel 13 having a rotation axis which is perpendicular to the axis of the bar 2, which wheel 13 is coupled in a V-profile guide groove parallel to the belt 3.

In a further embodiment, in order to exert a guiding action in only a lateral (horizontal) direction, the guide organ could be an idler wheel or a rotating bearing having a rotation axis perpendicular to the axis of the bar 2, which wheel or bearing 15 could be coupled on a flat guide 16 parallel to the belt 3.

Mounting and dismounting the joint would be especially rapid and simple.

The assembly and dismounting of the joint can easily be imagined on examining the accompanying figures of the drawings.

The method of constraint of the parts forming the joint ensures perfect stability, giving the joint a very strong overall resistance to traction, much superior to that which can be obtained between the two ends of a belt by, say, welding.

It should be borne in mind that the joint of the invention takes nothing away from the flexibility of the belt, so that its resistance to flexion, a periodic occurrence resulting from the winding of the belt about the two drums 7 and 8, is not affected and no incrementing tendency to weakening obtains.

## Claims

1. A joint for belts, for use especially with ring-wound belts stretched between two wheels or rotating drums, characterised in that two ends of a belt (3) which are to be joined up are made in such a way that each end exhibits a plurality of identical tongues (1) arranged in such a way that tongues (1) on a first of said two ends couple alternatedly with tongues (1) on a second of said ends and together the tongues (1) create a space internally thereof, into which a bar (2) can be slid; each tongue (1) can be constrained to the bar.

2. The joint of claim 1, characterised in that each of the tongues (1) exhibits a bent-back end (11) which is parallel to a non-bent portion of end (10), which non-bent end (10) is coplanar to the belt (3).

3. The joint of claim 2, characterised in that said bent-back end (11) and said non-bent portion of end (10) are of about a same length.

4. The joint of claim 3, characterised in that the tongues (1) are fixable to the bar (2) by a removable joint; the non-bent portions of end (10) of the tongues (1) of either end of the belt being fittable alternatedly with the other end thereof; a resulting surface of the non-bent portions of end (10) of the belt being flat and constituting a flat, continuous and single surface with the ends of the belt (3) when joined.

5. The joint of claim 4, characterised in that the removable connection for each tongue (1) is achiecved a screw (5) which can be inserted through a hole (12) afforded on a bent-back end (11) and into a threaded hole (20) bored in the bar (2).

6. The joint of claim 5, characterised in that the bar (2) is flat and has two opposite faces (21) which are flat, equal and have convex inter-connecting sides (22).

7. The joint of claim 6, characterised in that it comprises a U-shaped cover (4) which fits neatly over and by means of the screws (5) is screwed down onto the assembly constituted by the alternated tongues (1) of both ends of the belt (3) and the bar (2) inserted into the cavity afforded by the assembled tongues (1); the U-shaped cover (4) being provided with through-holes (40) which afford free passage to stems of the screws (5).

8. The joint of any one of the preceding claims, characterised in that a total length of the bar (2) is greater than a total breadth of the belt (3), so that both ends of the bar (2) project externally of sides of the belt (3); the projecting ends being coupled internally of C-shaped guides so as to function as guides for the belt (3) both in a vertical and in a lateral direction.

9. The joint of any one of claims from 1 to 7, characterised in that a total length of the bar (2) is greater than a total breadth of the belt (3), so that both ends of the bar (2) project externally of sides of the belt (3); each of the projecting ends bearing, inferiorly constrained, at least one guide organ rotatably coupled with a fixed guide which is parallel to the belt (3).

10. The joint of claim 9, characterised in that the guide organ comprises a convex-periphery idler wheel (13) having an axis of rotation which is perpendicular to an axis of the bar (2), which wheel (13) is coupled with a V-shaped guide parallel to the belt (3).

11. The joint of claim 9, characterised in that the guide organ comprises an idler wheel (15) having an axis of rotation which is perpendicular to an axis of the bar (2) and which is coupled on a flat guide (16) parallel to the belt (3).
